# EUROPÄISCHE PATENTANMELDUNG

(11) **EP 2 999 071 A1**
(43) Veröffentlichungstag der Anmeldung: **23.03.2016**
(21) Anmeldenummer: 15175289.6
(22) Anmeldetag: 03.07.2015
(51) Int. Cl.: H02G 3/14, H02G 3/12, H02G 3/08

(54) **ELEKTRISCHES INSTALLATIONSGERÄT MIT BESCHRIFTUNGSELEMENT**

(30) Priorität: 02.09.2014 DE 102014012770
(71) Anmelder: ABB AG, 68309 Mannheim (DE)
(72) Erfinder: Hafner, Alexander, 51580 Reichshof-Sinspert (DE); Waibel, Florian, 44799 Bochum (DE); Ewers, Manfred, 58239 Schwerte (DE); Lange, Manfred, Dortmund (DE); Sahlmann, Hans-Peter, 58454 Witten (DE)

(57) **Zusammenfassung**

Es wird ein elektrisches Installationsgerät mit einem Geräteeinsatz, insbesondere einem Unterputzeinsatz und darauf befindlicher Tragplatte (12), einer Zentralscheibe, einem Abdeckrahmen (1) mit wenigstens einer mit einem Sichtfenster (2, 3) abdeckbaren Sichtfensteröffnung (24) und wenigstens einem Beschriftungsschildhalter (6, 7) zur Aufnahme eines Beschriftungsschildes (8) vorgeschlagen, wobei der Beschriftungsschildhalter (6, 7) an seiner der Tragplatte (12) zugewandten Seite mit wenigstens einem eine erste und eine zweite Klebeseite aufweisenden Klebeband (10, 11) versehen ist, und der Beschriftungsschildhalter (6, 7) über die Rückseite des Abdeckrahmens (1) in die Sichtfensteröffnung (24) eingeführt ist. Dabei ragt zunächst ein Bereich des Beschriftungsschildhalters (6, 7) teilweise aus der Sichtfensteröffnung (24) des Rahmens (1) hinaus. Dieser Bereich ist mit einer Ausnehmung (22), vorzugsweise einer Nut, versehen, welche für die Aufnahme des Beschriftungsschildes (8) vorgesehen ist. Der der Beschriftungsschildhalter (6, 7) ist mit Rastelementen (13) ausgestattet, welche den Beschriftungsschildhalter (6, 7) hinter einer Kante (14) des Rahmens (1) nach unten und durch am Rahmen (1) angeordnete Anschläge (15, 16, 21) nach oben fixieren.

## Beschreibung

Die Erfindung betrifft ein elektrisches Installationsgerät, insbesondere ein Auf- oder Unterputz- Gerät, der Gebäudeinstallationstechnik mit einem Beschriftungselement, welches mit Informationen für einen Benutzer oder Installateur versehen ist.

Weiterhin betrifft die Erfindung einen Abdeckrahmen mit einer Sichtfensteröffnung für einen Beschriftungsschildhalter zur Aufnahme eines Beschriftungsschildes.

Derartige elektrische Installationsgeräte sind üblicherweise mit einem Geräteeinsatz und darauf befindlicher Tragplatte, einer Zentralscheibe und einem beschriftbaren Abdeckrahmen ausgestattet und für ein Installationsgeräte-Programm respektive Schalter- und Steckdosenprogramm sowie eine Kombination mit weiteren Geräten dieses Schalter- und Steckdosenprogramms vorgesehen. Solche elektrischen Installationsgeräte können beispielsweise als Schalter, Taster, Dimmer, Bewegungsmelder, Steckdose usw. ausgeführt sein.

Da Erstinstallation und Beschriftung der Geräte nicht unbedingt zum selben Zeitpunkt stattfinden und oft auch von verschiedenen Personen durchgeführt werden, ist es erforderlich die bereits installierten Abdeckrahmen der Installationsgeräte wieder abzunehmen, was mit einem erhöhten Montageaufwand, insbesondere bei der Ersteinrichtung des Installationsgerätes oder bei renovierungsarbeiten, verbunden ist.

Aus der DE 103 18 329 A1 ein Installationsgerät bekannt, welches mit einem beschriftbaren Schilderhalter ausgerüstet ist. Der Schilderhalter wird von der Frontseite des Rahmens durch eine offene Aufnahme im Rahmen hindurchgeschoben. An seiner Rückseite befinden sich Klettverschlussteile, die mit entsprechenden Klettverschlussteilen eines Tragorgans zusammenwirken. Der Schilderhalter ist mit einer durchsichtigen Schutzleiste bedeckt, die gegen Anschlagelemente der Abdeckung stößt und einen bündigen Abschluss der Vorderflächen bildet.

Das aus der EP 2 393175 A1 bekannte elektrische Installationsgerät ist mit einem Beschriftungsträger versehen, welcher zur Anordnung zwischen einem Unterputz-Geräteeinsatz und einem Sichtfenster eines Abdeckrahmens des Installationsgerätes vorgesehen ist. Der Beschriftungsträger wird mittels zusätzlichen Federelementen am Abdeckrahmen befestigt und mit Positionieransätzen zum lagerichtigen Positionieren am Geräteeinsatz versehen.

Aus der DE 10 2013 100 909 A ist ein weiteres Installationsgerät mit einem Beschriftungsschildhalter zur Aufnahme eines Beschriftungsschildes bekannt, der mittels einer Vielzahl von Einzelteilen, wie beispielsweise Gleitstücken, Halteelementen und Klebeträgern, im Rahmen des Installationsgerätes befestigt ist. Der Beschriftungsschildhalter ragt in die mit einem Sichtfensterelement verschließbare Sichtfensteröffnung des Abdeckrahmens hinein und weist zur Festlegung am Träger Ausnehmungen auf, welche mit einem Gleitstück zusammenwirken. Das Gleitstück ist mit einer aufwendigen Innenverzahnung ausgestattet. Die Innenverzahnung des Gleitstückes greift in ein Halteelement ein, wodurch das Gleitstück über das Halteelement am Träger festlegbar ist.

Aus der DE 10 2010 016 648 B4 ist ein elektrisches Unterputz-Installationsgerät mit einem zur Festlegung am Einbauort vorgesehenen Träger versehen, an dem ein mit einer Sichtfensteröffnung versehener Abdeckrahmen festlegbar ist. Zur Aufnahme eines Beschriftungsschildes ist ein Träger vorgesehen und das Beschriftungsschild ist mittels einer Klemmfeder am Träger befestigt.

Der Erfindung liegt die Aufgabe zugrunde, ein Installationsgerät mit einem Geräteeinsatz und darauf befindlicher Tragplatte, einer Zentralscheibe, einem Abdeckrahmen und einem Beschriftungselement anzugeben, wobei die Beschriftung in einfacher Weise auch nachträglich erfolgen kann, ohne dass der bereits installierte Abdeckrahmen entfernt werden muss sowie, insbesondere der Montageaufwand beim Beschriften des Installationsgerätes, reduziert wird.

Dabei soll das Beschriftungselement, nachfolgend auch Beschriftungsschild oder beschriftbarer Streifen genannt, nach Erstinstallation auf einem installierten Unterputzeinsatz verbleiben, auch wenn der Rahmen, beispielsweise bei einer Renovierung, abgenommen wird. Der Hintergrund dieser Anforderung beruht vorteilhafterweise auf einer richtigen Zuordnung der Unterputzeinsätze der Installationsgeräte zur Unterverteilung bzw. Hauptverteilung nach einer Renovierung oder Reparatur der Installationsgeräte.

Die gestellte Aufgabe wird erfindungsgemäß gelöst durch ein elektrisches Installationsgerät, insbesondere Unterputzgerät, der Gebäudeinstallationstechnik mit Geräteeinsatz, darauf aufzubringender Zentralscheibe und Abdeckrahmen sowie einem Beschriftungsschild, welches mit Informationen für einen Benutzer oder Installateur versehen ist.

Die Lösung der Aufgabe erfolgt erfindungsgemäß mit den in Anspruch 1 angegebenen Merkmalen.

Vorteilhafte Ausführungsformen und zweckmäßige Weiterbildungen der Erfindung sind in den Unteransprüchen angegeben.

Das erfindungsgemäße elektrische Installationsgerät ist mit einem Geräteeinsatz mit Tragplatte, insbesondere einem Unterputzeinsatz, und darauf befindlicher Zentralscheibe, einem Abdeckrahmen mit wenigstens einer mit einem Sichtfenster verschließbaren Sichtfensteröffnung und wenigstens einem Beschriftungsschildhalter zur Aufnahme eines Beschriftungsschildes ausgestattet.

Der Beschriftungsschildhalter ist an seiner der Tragplatte zugewandten Seite mit wenigstens einem eine erste und eine zweite Klebeseite aufweisenden Klebeband, auch als doppelseitiges Klebeband bekannt, versehen. Erfindungsgemäß ist der Schildhalter über die Rückseite des Abdeckrahmens in die Sichtfensteröffnung, vorzugsweise in einer Vorraststellung, eingeführt bzw. eingerastet, wobei zunächst ein Bereich des Beschriftungsschildhalters teilweise aus der Sichtfensteröffnung des Rahmens hinausragt. Dieser Bereich ist mit einer, beispielsweise als Nut ausgeführter Ausnehmung, versehen, welche das Beschriftungsschild aufnimmt bzw. in welches das Beschriftungsschild einschiebbar ist.

Der Abdeckrahmen bildet mit dem Beschriftungsschildhalter und der darauf aufgebrachten ersten Klebeseite des Klebebandes eine vormontierte Einheit. Die vormontierte Einheit ist mittels der zweiten Klebeseite des Klebebandes auf der Tragplatte des Geräteeinsatzes fixierbar, wobei der mit dem Beschriftungsschild versehene Beschriftungsschildhalter über im Rahmen befindliche Führungselemente, beispielsweise Stege, so herunterdrückbar ist, dass der Beschriftungsschildhalter so tief im Rahmen angeordnet ist, dass nach dem Aufsetzen bzw. Aufrasten des Sichtfensters auf dem Abdeckrahmen dieses bündig abschließt.

Die mit der Erfindung erzielbaren Vorteile liegen insbesondere darin, dass der Beschriftungsschildhalter so über den Rahmen aufgenommen wird, dass das Beschriftungsschild in einfacher Weise in den Schildhalter eingelegt werden kann. Die so vormontierte Einheit mit dem auf dem Beschriftungsschildhalter aufgebrachten doppelseitigen Klebebandes ermöglicht eine sichere Positionierung und Befestigung derselben an der Tragplatte des Geräteeinsatzes. Der Abdeckrahmen kann als 1fach-Abddeckrahmen, 2fach- Abdeckrahmen oder mehrfach- Abdeckrahmen ausgeführt sein und entsprechend eine, zwei oder mehr Sichtfensteröffnungen für die Aufnahme der Beschriftungsschildhalter aufweisen.

Erfindungsgemäß ist das doppelseitige Klebeband an der zweiten Klebeseite, also der dem Schildhalter abgewandten Seite, mit einer über die Klebefläche hinausreichenden lösbaren Schutzfolie versehen. Die Schutzfolie ragt über den Rahmen heraus. Nach dem Entfernen der Schutzfolie ist die Klebeschicht in vorteilhafter Weise auf der zweiten Klebeseite im montierten Zustand auf dem Schildhalter freigelegt. Die Schutzfolie ist nach der Montage des Rahmens an der Wand an einem oder beiden ihrer über den Rahmen hinausstehenden Enden aus dem Rahmen herausziehbar, sodass die zweite Klebeseite des Klebebandes freiliegt.

Durch ein Herunterdrücken des Beschriftungsschildhalters ist dieser mittels des Klebebandes dann auf der Tragplatte des Geräteeinsatzes befestigt.

Da der Beschriftungsschildhalter erfindungsgemäß mit Rastelementen ausgestattet ist, welche mit im Rahmen befindlichen Führungselementen zusammenwirken, wird der Schildhalter nachdem das Beschriftungsschild eingelegt wurde so in den Rahmen eingefügt, dass das darauf aufgesteckte oder eingeklipste transparenten Sichtfenster bündig mit der Rahmenoberfläche des Abdeckrahmens abschließt. Dadurch verringert sich der Montageaufwand des Gerätes für den Elektroinstallateur erheblich. Außerdem kann das Montieren und anschließende Beschriften der Rahmen zeitlich getrennt erfolgen.

Als besonders vorteilhaft erweist sich, dass, beispielsweise im Renovierungsfall, der auf der Tagplatte aufgeklebte Beschriftungsschildhalter mit dem entsprechendem Beschriftungsschild auf der Tragplatte an der durch den Rahmen vorgegebenen Position verbleibt, auch wenn der Abdeckrahmen entfernt wird.

Die gestellte Aufgabe wird weiterhin durch einen Abdeckrahmen mit einer Sichtfensteröffnung für einen Beschriftungsschildhalter zur Aufnahme eines Beschriftungsschildes mit den in Anspruch 9 angegebenen Merkmalen gelöst.

Der Beschriftungsschildhalter ist an seiner Rückseite mit wenigstens einem eine erste und eine zweite Klebeseite aufweisenden Klebeband versehen, wobei der Beschriftungsschildhalter über die Rückseite des Abdeckrahmens in die Sichtfensteröffnung eingeführt ist.

Dabei ragt zunächst ein Bereich des Beschriftungsschildhalters teilweise aus der Sichtfensteröffnung des Rahmens hinaus. Dieser Bereich ist mit einer Ausnehmung, vorzugsweise einer Nut, versehen, welche für die Aufnahme des Beschriftungsschildes vorgesehen ist. Der Beschriftungsschildhalter ist mit Rastelementen ausgestattet, welche den Beschriftungsschildhalter hinter einer Kante des Rahmens nach unten und durch am Rahmen angeordnete Anschläge nach oben fixieren.

Die Montage des erfindungsgemäßen Abdeckrahmens erfolgt gemäß der nachfolgenden Schritte.

In einem ersten Montageschritt wird der Beschriftungsschildhalter als vormontierte Einheit mit dem doppelseitigen Klebeband über die Rückseite des Abdeckrahmens in dessen Sichtfensteröffnung eingeführt ist, wobei zunächst ein Bereich des Beschriftungsschildhalters teilweise aus der Sichtfensteröffnung des Rahmens hinausragt. In diesem Bereich ist die Nut für die Aufnahme des Beschriftungsschildes eingearbeitet. Nachdem das Beschriftungsschild in einem zweiten Schritt in die Nut des frei zugänglichen Beschriftungsschildhalterteiles eingeschoben wurde, werden in einem nächsten Schritt die zwischen der Wand und dem Abdeckrahmen herausragenden Schutzfolien entfernt. In einem weiteren Montageschritt wird der Beschriftungsschildträger in Richtung der Wand heruntergedrückt bzw. in den Abdeckrahmen hineingedrückt, so dass der Schildträger mittels des Klebebandes auf der Tragplatte des Geräteeinsatzes befestigt ist. Das Aufrasten des Sichtfensters auf dem Abdeckrahmen und damit ein bündiger Abschluss desselben auf dem Rahmen erfolgt in einem letzten Montageschritt.

Anhand der in den folgenden Zeichnungen dargestellten Ausführungsbeispiele sollen die Erfindung, weitere Ausführungsformen und Vorteile näher beschrieben werden.

Es zeigen:
- **Fig.** 1: eine Draufsicht auf einen Abdeckrahmen eines elektrischen Installationsgerätes mit zwei vormontierten Beschriftungsschildhaltern 6, 7 in einer beispielhaften Ausführung,
- **Fig.** 2: einen beispielhaften Abdeckrahmen eines Installationsgerätes im vormontierten Zustand in Explosionsdarstellung,
- **Fig.** 3: den beispielhaften Abdeckrahmen des Installationsgerätes als vormontierte Einheit,
- **Fig.** 4: eine erste Schnittansicht sowie eine Detailansicht des auf die Wand aufgesetzten Abdeckrahmens mit integriertem Beschriftungsschildhalter vor dem Herunterdrücken des Schilderhalters und vor dem Aufbringen des Sichtfensters,
- **Fig.** 5: eine zweite Schnittansicht und eine Detailansicht eines Ausschnittes des auf die Wand aufgesetzten Abdeckrahmens vor dem Herunterdrücken des Schilderhalters und vor dem Aufbringen des Sichtfensters, mit der über den Rahmen hinausragenden Schutzfolie des Klebebandes ,
- **Fig.** 6: eine dritte Schnittansicht und eine Detailansicht des auf die Wand aufgesetzten Abdeckrahmens mit integriertem Beschriftungsschildhalter vor dem Herunterdrücken des Schilderhalters und vor dem Aufbringen des Sichtfensters,
- **Fig.** 7: eine vierte Schnittansicht und eine Detailansicht eines Ausschnittes des auf die Wand aufgesetzten Abdeckrahmens mit dem über ihrer über den Rahmen hinausragenden Schutzfolie des Klebebandes vor dem Herunterdrücken des Schilderhalters und vor dem Aufbringen des Sichtfensters,
- **Fig.** 8: eine weitere Schnittansicht und eine Detailansicht eines Ausschnittes des Installationsgerätes nach dem Befestigen des Beschriftungsschildhalters mit dem Beschriftungsschild auf der Tragplatte.

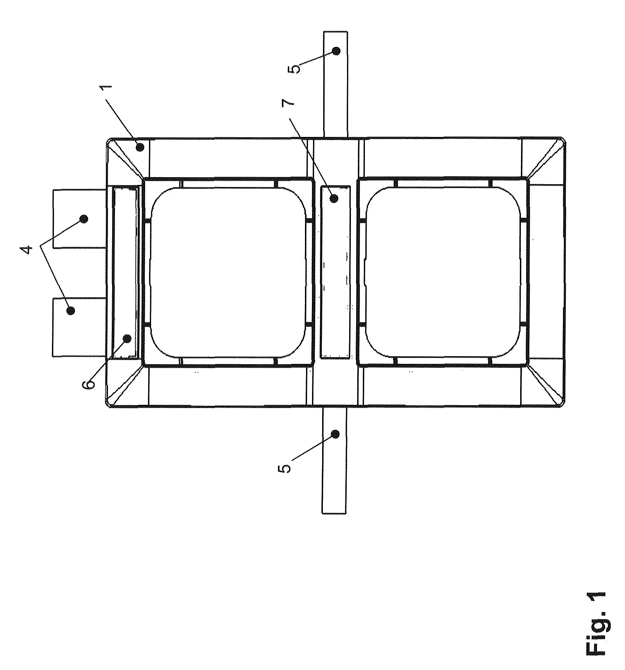

In **Fig.** 1 ist eine Draufsicht auf einen 2-fach- Abdeckrahmen 1 bzw. die Vorderseite eines beispielhaften elektrischen Unterputz- Installationsgerätes dargestellt, welcher Aufnahmemöglichkeiten für zwei Unterputz- Geräteinsätze aufweist. Auf den jeweiligen Geräteeinsätzen wird entsprechend der Gerätefunktion eine Zentralscheibe angebracht. Der 2fach- Abdeckrahmen 1 komplettiert das betrachtete elektrische Installationsgerät.

Der hier gezeigte beispielhafte Abdeckrahmen 1 ist mit zwei vormontierten Beschriftungsschildhaltern 6, 7 ausgestattet. In den beiden Beschriftungsschildern 6, 7 sind Nuten bzw. Öffnungen zur Aufnahme jeweils eines beschriftbaren Streifens bzw. eines Beschriftungsschildes vorgesehen. In die im Rahmen befindlichen Öffnungen für die Beschriftungsschildhalter ist werksseitig von der Rahmenrückseite aus jeweils ein Beschriftungsschildhalter 6, 7 eingeschoben, wobei die Schildhalter 6, 7 etwas aus den im Rahmen 1 befindlichen Sichtfensteröffnungen herausragen.

Die Beschriftungsschildhalter 6, 7 sind jeweils an ihrer Unterseite werksseitig mit doppelseitigem Klebeband versehen. Das auf den Beschriftungsschildhaltern 6, 7, auch Schriftfeldträger genannt, aufgebrachte doppelseitige Klebeband ermöglicht, dass die in den Öffnungen angeordneten Beschriftungsschildhalter 6, 7 mit dem eingeschoben Beschriftungsschild auf der Tragplatte des Unterputzeinsatzes auch nach einem Entfernen des Abdeckrahmens 1 verbleiben.

Das doppelseitige Klebeband ist an der dem Schildhalter 6, 7 abgewandten Seite mit einer über die Klebefläche hinausreichenden lösbaren Schutzfolie 4, 5 versehen. Die Schutzfolie 4, 5 ragt nach Montage des Rahmens 1 zwischen der Wand und dem Rahmen 1 heraus und wird nach der Montage des Rahmens 1 auf dem Geräteeinsatz bzw. an der Wand entfernt. Dazu ist die Schutzfolie 4, 5 nach der Montage des Rahmens 1 an einem oder beiden ihrer über den Rahmen 1 hinausstehenden Enden aus dem Rahmen 1 herausziehbar, sodass die zweite Klebeseite des Klebebandes freiliegt.

Besonders vorteilhaft ist, dass die im Rahmen befindlichen Sichtfensteröffnungen auf die Höhe der Beschriftungsschildhalter derart abgestimmt sind, dass bei eingesetztem Sichtfenster ein Tapeten- oder Putzausgleich stattfinden kann.

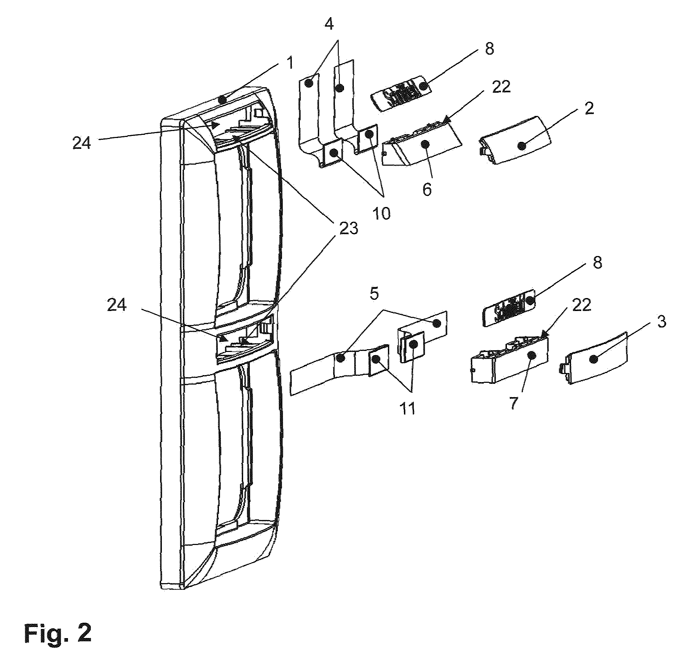

**Fig.** 2 zeigt einen beispielhaften Abdeckrahmen 1 eines Installationsgerätes und den Komponenten, welche im vormontierten Zustand mit dem Abdeckrahmen 1 zusammengefügt werden, in Explosionsdarstellung.

Der hier dargestellte vormontierte 2fach- Rahmen 1 weist zwei Sichtfensteröffnungen 24 sowie entsprechende Beschriftungsschildhalter 6, 7 mit aufgebrachtem doppelseitigen Klebeband 10, 11 und Schutzfolie 4, 5 auf. Das doppelseitige Klebeband 10, 11 dient der Fixierung des Beschriftungsschildhalters 6, 7 an der Tragplatte des Geräteeinsatzes.

Die Sichtfensteröffnungen 24 weisen als Stege 23 ausgeführte Führungselemente auf, welche die Beschriftungsschildhalter 6, 7 im Rahmen 1 beim Herunterdrücken an einem Verkanten hindern.

In den Beschriftungsschildhaltern 6, 7 sind, vorzugsweise als Nut ausgeführte Ausnehmungen 22 eingearbeitet, die jeweils ein Beschriftungsschild 8 aufnehmen. Abgedeckt wird der jeweilige Beschriftungsschildhalter 6, 7 mit einem Sichtfenster 2, 3 aus transparentem Kunststoff.

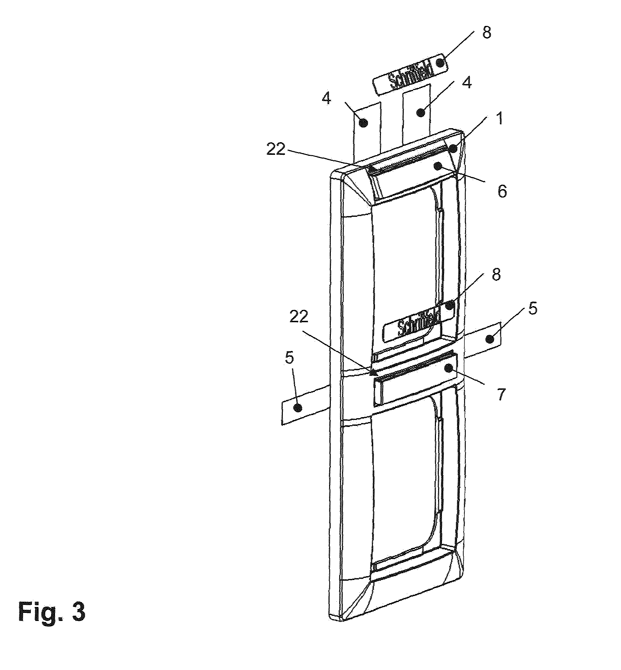

**Fig.** 3 zeigt den beispielhaften 2fach-Abdeckrahmen 1 des Installationsgerätes als vormontierte Einheit, in welche die Beschriftungsschilder 8 in die aus dem Rahmen 1 teilweise herausragenden desjeweiligen Beschriftungsschildhalter 6, 7 einschiebbar sind und die hier nicht sichtbaren doppelseitigen Klebebänder 10, 11 mit ihren Klebeflächen auf der Rückseite der Beschriftungsschildhalter 6, 7 aufgebracht sind.

Der aus dem Rahmen 1 herausragende Bereich desjeweiligen Beschriftungsschildhalters 6, 7 ist so festgelegt, dass das entsprechende Beschriftungsschild 8 in die als Nut ausgeführte Ausnehmung 22 im jeweiligen Beschriftungsschildhalter 6, 7 einführbar ist, ohne dass die Schildhalter 6, 7 aus dem Rahmen 1 herausgenommen werden müssen, da die Nut 22 im vormontierten Zustand außerhalb des Rahmens 1 liegt und somit frei zugänglich ist.

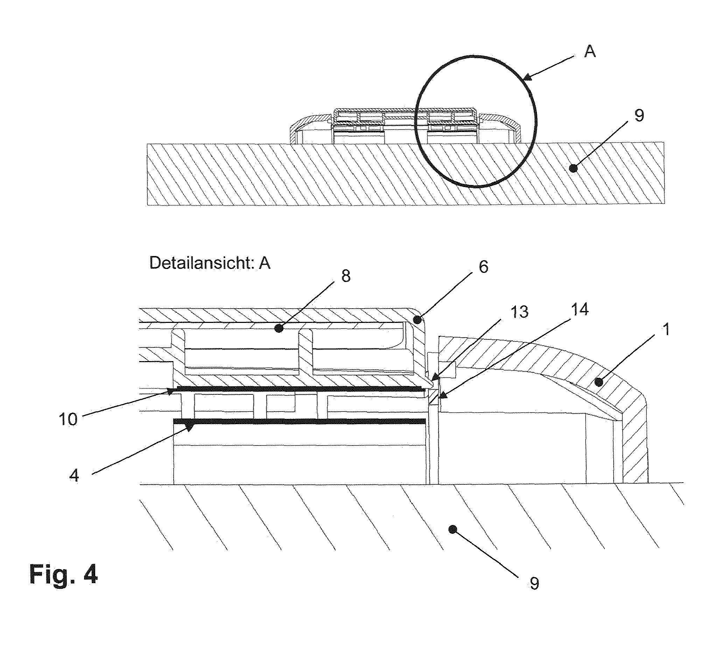

**Fig.** 4 zeigt eine erste Schnittansicht sowie eine Detailansicht A des auf die Wand 9 aufgesetzten beispielhaften Abdeckrahmen 1 mit dem über die Rahmenrückseite in die hier nicht sichtbare Sichtfensteröffnung 24 eingesetzten Beschriftungsschildhalter 6, in dem das Beschriftungsschild 8 eingesteckt ist und dem doppelseitigem Klebeband 10 sowie der Schutzfolie 4.

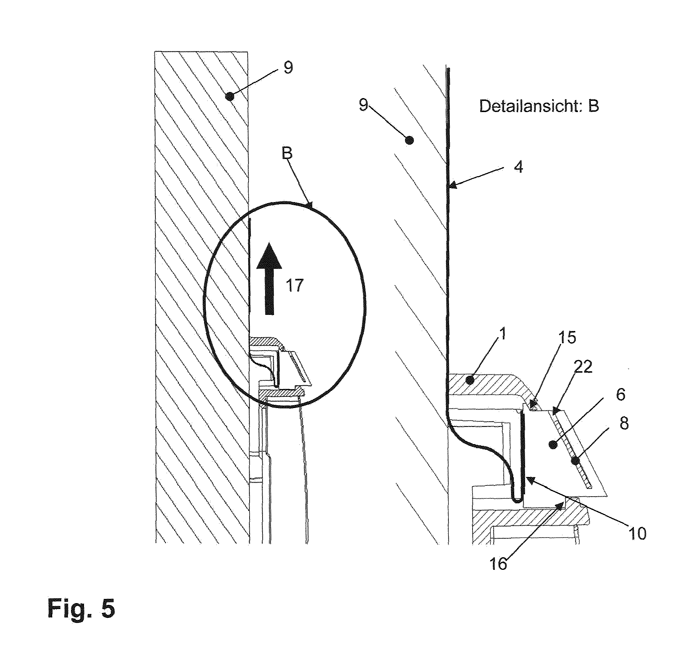

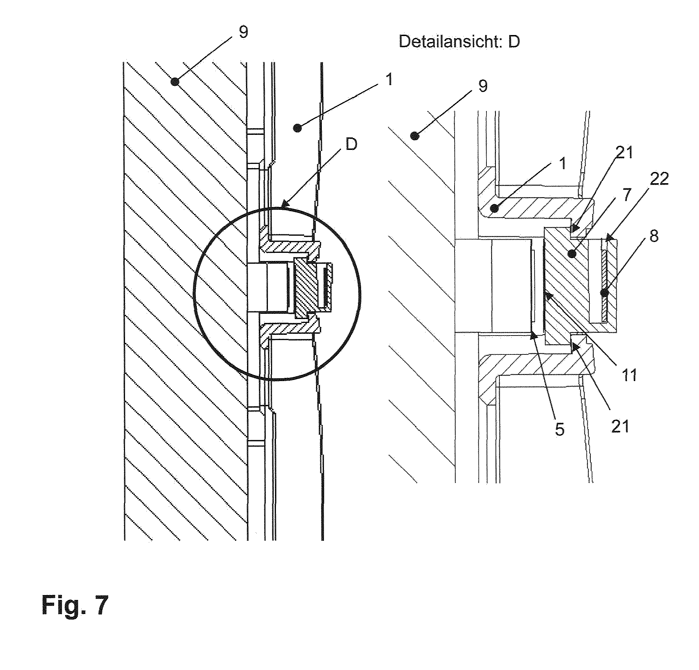

Der gezeigte Beschriftungsschildhalter 6 ist dabei so gestaltet, dass dieser mittels angeformter Rastnasen 13 hinter einer Kante 14 des Rahmens 1 nach unten, also in Richtung des Rahmens 1 gedrückt werden kann und durch Anschläge, die in den Figuren 5 und 7 gezeigt sind, fixierbar ist. Dadurch wird erreicht, dass der Beschriftungsschildhalter 6 bei Auslieferung im vormontierten Zustand im Rahmen 1 in einer Vorraststellung festgehalten ist.

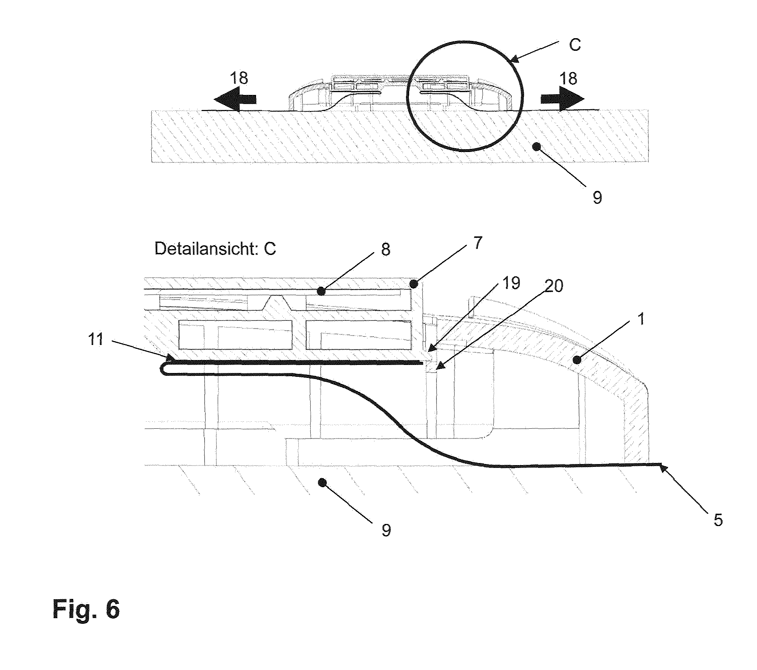

In den **Fig.** 5 und 6 sind eine zweite und eine dritte Schnittansicht sowie entsprechende Detailansichten B, C jeweils eines Ausschnittes des auf die Wand 9 aufgesetzten Abdeckrahmens 1 mit dem über die Rahmenrückseite in die hier nicht sichtbare Sichtfensteröffnung 24 eingesetztem beispielhaften Beschriftungsschildhalter 6, 7 gezeigt. In die im jeweiligen Beschriftungsschildhalter 6, 7 vorgesehene Nut 22 ist das Beschriftungsschild 8 eingesteckt. Weiterhin zeigen die Detailansichten B, C das zwischen der Tragplatte des Unterputz-Geräteeinsatzes und dem Beschriftungsschildhalter 6, 7 befindliche doppelseitige Klebeband 10, 11 sowie die Schutzfolie 4, 5. Der Beschriftungsschildhalter 6, 7 ist mittels der in Figur 4 gezeigten Rastnasen 13 sowie durch Anschläge 15, 16 (siehe Fig. 5) bzw. Rastnasen 19 und am Abdeckrahmen vorgesehene Kanten 20 (siehe Fig. 6) im Rahmen 1 gehalten.

Nach Montage des Rahmens 1 auf der Wand 9 beziehungsweise auf dem Unterputzeinsatz und nach Einlegen des Beschriftungsschildes 8 werden die auf dem doppelseitigen Klebeband 10, 11 befindlichen Schutzfolien 4, 5 aus dem Rahmen 1 herausgezogen. Die Richtung des Herausziehens der aufgebrachten Schutzfolien 4, 5 zum Freilegen der zweiten Klebeseite des doppelseitigem Klebebandes 10, 11 zeigen die Pfeile 17, 18. Als zweite Klebeseite ist die Seite des doppelseitigen Klebebandes 10, 11 gemeint, mittels der die vormontierte Einheit auf der Tragplatte des Geräteeinsatzes ausgerichtet und festgehalten ist.

Durch ein Herunterdrücken der Beschriftungsschildhalter 6, 7 werden diese mittels dem Klebeband 10, 11 auf der Tragplatte Unterputzeinsatzes fixiert. Beim Herunterdrücken werden die Beschriftungsschildhalter 6, 7 durch die in Fig. 2 gezeigten Stege 23 im Rahmen 1 geführt, wodurch die Position der Beschriftungsschildhalter 6, 7 auf der Tragplatte festgelegt ist.

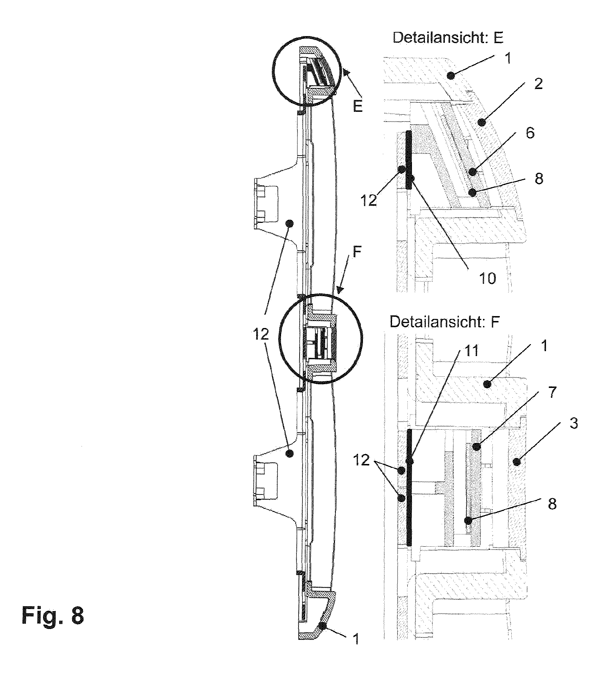

Der Beschriftungsschildhalter 6, 7 sitzt nach dem Herunterdrücken vertieft, wobei in vorteilhafter Weise erst durch das nachträglich aufgerastete Sichtfenster 2, 3 ein bündiger Abschluss zur Rahmenoberfläche desselben erreicht wird. Dies ist in Fig. 8 gezeigt.

**Fig.** 7 zeigt einen weiteren Ausschnitt des an der Wand 9 montierten Abdeckrahmens Rahmens 1 eines beispielhaften Installationsgerätes vor dem Befestigen des Beschriftungsschildhalters 7 auf der Tragplatte des Geräteeinsatzes. Der in der hier nicht sichtbaren Sichtfensteröffnung 24 des Rahmens 1 aufgenommenen Beschriftungsschildhalters 7 ist in einer Vorraststellung als vierte Schnittdarstellung sowie Detailansicht D dargestellt. Dabei ragt ein Bereich des Beschriftungsschildhalters 7 teilweise aus der Sichtfensteröffnung 24 des Rahmens 1 hinaus, wobei in diesem Bereich die als Nut ausgeführte Ausnehmung 22 zum Einschieben des Beschriftungsschildes 8 angeordnet ist. Das Beschriftungsschild 8 kann so in einfacher Weise in den Beschriftungsschildhalter 7 eingeschoben werden, ohne diesen aus dem Rahmen 1 herausnehmen zu müssen, da die Nut 22 im vormontierten Zustand bzw. in Vorraststellung aus dem Rahmens 1 herausragt.

An seiner zur Wand 9 weisenden Seite ist der Beschriftungsschildhalter 7 mit dem doppelseitigen Klebebandes 11 versehen. Das doppelseitige Klebeband 11 mit der über den Rahmen 1 hinausreichenden lösbaren Schutzfolie 5 versehen.

Der Beschriftungsschildhalter 7 ist auch hier mittels seiner angeformten Rastnasen 19, die in der Fig. 4 gezeigt sind, hinter der Kante des Rahmens 1 nach unten und durch am Rahmen 1 vorgesehene Anschläge 21 nach oben fixiert. Wird der Beschriftungsschildhalter 7 nunmehr in die Sichtfensteröffnung 24 des Rahmens 1 hineingedrückt, verbindet der Klebestreifen 10, 11 diesen so mit der Tragplatte des Geräteeinsatzes, dass der Schilderhalter 6, 7 nicht mehr über den Abdeckrahmen 1 hinausragt.

**Fig.** 8 zeigt einen 2fach-Abdeckrahmen 1 mit einem im oberen Bereich angeordnetem und befestigtem Beschriftungsschildhalter 6 erster Ausführungsform sowie einem etwa in der Mitte angeordnetem und befestigten Beschriftungsschildhalter 7 zweiter Ausführungsform in einer weiteren Schnittansicht und jeweils eine Detailansicht E, F eines Ausschnittes des Installationsgerätes mit den Beschriftungsschildhaltern 6, 7 erster und zweiter Ausführung auf den Tragplatten 12 des Geräteeinsatzes. Hier sind die Beschriftungsschildhaltern 6, 7 bereits gegen die Wand 9 gedrückt und auf den Tragplatten 12 mittels dem doppelseitigem Klebeband 10, 11 festgeklebt.

Die Tragplatten 12 sind auf dem jeweiligen Geräteeinsatz auf einen für die Montage in eine handelsübliche UP-Gerätedose geeigneten Gerätesockel des Unterputz- Installationsgerätes werksseitig montiert.

In dieser Darstellung sind die Schutzfolien 4, 5 bereits entfernt also aus dem Rahmen 1 herausgezogen und die mit dem Beschriftungsschildern 8 versehene Beschriftungsschildhalter 6, 7 über die im Rahmen befindliche Stege 23, die in der Fig. 2 gezeigt sind, heruntergedrückt.

Nachdem die Beschriftungsschildhalter 6, 7 auf der Tragplatte 12 ausgerichtet und festgehalten sind, werden die transparenten Sichtfenster 2, 3 in entsprechende Aussparung am Rahmen 1 eingesteckt bzw. eingeklipst. Durch die montierten Sichtfenster 2, 3 findet ein bündiger Abschluss mit der Oberfläche des Rahmens 1 statt.

Die Sichtfenster 2, 3 und die Beschriftungsschildhalter 6, 7 sind aus transparentem Kunststoff gefertigt, um die eingeschobenen Beschriftungsschilder 8 lesen zu können.

### Bezugszeichenliste

- 1: Abdeckrahmen
- 2: Sichtfenster
- 3: Sichtfenster
- 4: Schutzfolie
- 5: Schutzfolie
- 6: Beschriftungsschildhalter, Schriftfeldträger
- 7: Beschriftungsschildhalter, Schriftfeldträger
- 8: Beschriftungselement, Beschriftungsschild, beschriftbarer Streifen,
- 9: Wand
- 10: doppelseitiges Klebeband, Klebestreifen, Klebefläche
- 11: doppelseitiges Klebeband, Klebestreifen, Klebefläche
- 12: Tragplatte am Geräteeinsatzes bzw. Unterputzeinsatzes
- 13: Rastelement, Rastnase
- 14: Kante am Abdeckrahmen
- 15: Anschlag am Abdeckrahmen
- 16: Anschlag am Abdeckrahmen
- 17: Richtung des Herausziehens der Schutzfolien der Klebestreifen zum Freilegen zweiten Klebeseite des doppelseitigem Klebebandes
- 18: Richtung des Herausziehens der Schutzfolien der Klebestreifen zum Freilegen zweiten Klebeseite des doppelseitigem Klebebandes
- 19: Rastelement, Rastnase
- 20: Kante am Abdeckrahmen
- 21: Anschlag am Abdeckrahmen
- 22: Ausnehmung, Nut
- 23: Stege im Rahmen
- 24: Sichtfensteröffnung

## Patentansprüche

1. Elektrisches Installationsgerät mit einem Geräteeinsatz, insbesondere einem Unterputzeinsatz und darauf befindlicher Tragplatte (12), einer Zentralscheibe, einem Abdeckrahmen (1) mit wenigstens einer mit einem Sichtfenster (2, 3) abdeckbaren Sichtfensteröffnung (24) und wenigstens einem Beschriftungsschildhalter (6, 7) zur Aufnahme eines Beschriftungsschildes (8), wobei
- der Beschriftungsschildhalter (6, 7) an seiner der Tragplatte (12) zugewandten Seite mit wenigstens einem eine erste und eine zweite Klebeseite aufweisenden Klebeband (10, 11) versehen ist, wobei
- der Beschriftungsschildhalter (6, 7) über die Rückseite des Abdeckrahmens (1) in die Sichtfensteröffnung (24) eingeführt ist, wobei
- zunächst ein Bereich des Beschriftungsschildhalters (6, 7) teilweise aus der Sichtfensteröffnung (24) des Rahmens (1) hinausragt und dieser Bereich mit einer Ausnehmung (22), vorzugsweise einer Nut, versehen ist, welche für die Aufnahme des Beschriftungsschildes (8) vorgesehen ist, wobei
- der Beschriftungsschildhalter (6, 7) mit Rastelementen (13, 19) ausgestattet ist, welche den Beschriftungsschildhalter (6, 7) hinter einer Kante (14, 20) des Rahmens (1) nach unten und durch am Rahmen (1) angeordnete Anschläge (15, 16, 21) nach oben fixieren.

2. Elektrisches Installationsgerät nach Anspruch 1, **dadurch gekennzeichnet, dass** der Abdeckrahmen (1) mit dem Beschriftungsschildhalter (6, 7) und der darauf aufgebrachtem ersten Klebeseite des Klebebandes (10,11) eine vormontierte Einheit (4, 5) bildet.

3. Elektrisches Installationsgerät nach Anspruch 2, **dadurch gekennzeichnet, dass** die vormontierte Einheit mittels der zweiten Klebeseite des Klebebandes (10, 11) auf der Tragplatte (12) fixierbar ist.

4. Elektrisches Installationsgerät nach einem der vorstehenden Ansprüche, **dadurch gekennzeichnet, dass** der Beschriftungsschildhalter (6, 7) mittels des Klebebandes (10, 11) so an der Tragplatte (12) des Geräteeinsatzes befestigt ist, dass auch nach einem Entfernen des Abdeckrahmens (1) der Beschriftungsschildhalter (6, 7) auf dem Geräteeinsatz verbleibt.

5. Elektrisches Installationsgerät nach einem der vorstehenden Ansprüche, **dadurch gekennzeichnet, dass** im Rahmen (1) befindliche Stege (23) den Beschriftungsschildhalter (6, 7) im Rahmen (1) führen und die Position des Beschriftungsschildhalters (6, 7) auf der Tragplatte (12) festlegen.

6. Elektrisches Installationsgerät nach einem der vorstehenden Ansprüche, **dadurch gekennzeichnet, dass** das Klebeband (10, 11) an der zweiten Klebeseite mit einer über die Klebeflächen des Klebebandes (10, 11) hinausreichende lösbaren Schutzfolie (4, 5) ausgestattet ist, welche nach einer Montage des Rahmens (1) an einem oder beiden ihrer über den Rahmen (1) hinausstehenden Enden aus dem Rahmen (1) herausziehbar ist, sodass die zweite Klebeseite des Klebebandes (10, 11) freiliegt und durch ein Herunterdrücken des Beschriftungsschildhalters (6, 7) dieses mittels des Klebebandes (10 und 11) auf der Tragplatte (12) des Geräteeinsatzes befestigt ist.

7. Elektrisches Installationsgerät nach einem der vorstehenden Ansprüche, **dadurch gekennzeichnet, dass**, der mit dem Beschriftungsschild (8) versehene Beschriftungsschildhalter (6, 7) über im Rahmen (1) befindliche Führungselemente (23) so herunterdrückbar ist, dass nach dem Aufsetzen des Sichtfensters (2, 3) diese bündig mit dem Abdeckrahmen (1) abschließen.

8. Elektrisches Installationsgerät nach einem der vorstehenden Ansprüche, **dadurch gekennzeichnet, dass** die im Rahmen (1) befindlichen Sichtfensteröffnungen (24) auf die Höhe der Beschriftungsschildhalter (6, 7) derart abgestimmt sind, dass bei eingesetztem Sichtfenster (2, 3) ein Tapeten- oder Putzausgleich stattfindet.

9. Abdeckrahmen für ein elektrisches Installationsgerät mit wenigstens einer Sichtfensteröffnung (24) für einen Beschriftungsschildhalter (6, 7) zur Aufnahme eines Beschriftungsschildes (8), welcher an seiner Rückseite mit wenigstens einem eine erste und eine zweite Klebeseite aufweisenden Klebeband (10, 11) versehen ist, wobei der Beschriftungsschildhalter (6, 7) über die Rückseite des Abdeckrahmens (1) in die Sichtfensteröffnung (24) eingeführt ist, wobei
- zunächst ein Bereich des Beschriftungsschildhalters (6, 7) teilweise aus der Sichtfensteröffnung (24) des Rahmens (1) hinausragt und dieser Bereich mit einer Ausnehmung (22), vorzugsweise einer Nut, versehen ist, welche für die Aufnahme des Beschriftungsschildes vorgesehen ist, wobei
- der Beschriftungsschildhalter (6, 7) mit Rastelementen (13, 19) ausgestattet ist, welche den Beschriftungsschildhalter (6, 7) hinter einer Kante (14, 20) des Rahmens (1) nach unten und durch am Rahmen (1) angeordnete Anschläge (15, 16, 21) nach oben fixieren.
